# EUROPEAN PATENT SPECIFICATION

(11) **EP 2 332 634 B1**
(45) Date of publication and mention of the grant of the patent: **23.05.2012**
(21) Application number: 10252071.5
(22) Date of filing: 07.12.2010
(51) Int. Cl.: B01D 53/94, F01N 11/00, B01D 46/24, F01N 3/022, F01N 3/28, F01N 13/00

(54) **Honeycomb catalyst body with sensor device**
Wabenförmiger Katalysatorkörper mit Sensorvorrichtung
Corps de catalyseur en nid d'abeille avec dispositif capteur

(30) Priority: 14.12.2009 JP 2009282729
(43) Date of publication of application: 15.06.2011
(73) Proprietor: NGK Insulators, Ltd., Nagoya-City, Aichi Pref. 467-8530 (JP)
(72) Inventor: Yamada, Toshio, Nagoya City, Aichi-ken 467-8530 (JP); Shimoda, Kenjiro, Nagoya City, Aichi-ken 467-8530 (JP)
(74) Representative: Paget, Hugh Charles Edward

(56) References cited:
- EP-A1- 1 961 929
- JP-A- 2003 225 576
- JP-A- 2009 074 425

## Description

### Background of the Invention and Related Art Statement

The present invention relates to a honeycomb catalyst body suitably used for purifying target components to be purified, such as carbon monoxide (CO), hydrocarbon (HC), nitrogen oxide (NOx), and sulfur oxide (SOx) contained in exhaust gas discharged from an automobile engine, a construction machine engine, an industrial stationary engine, a burning appliance, and the like. More specifically, the present invention relates to a honeycomb catalyst body capable of inhibiting breakage of a gas sensor (gas sensor element) due to adhesion of water by a simple method with maintaining the function of the gas sensor.

There has conventionally been known an exhaust gas purification system where a honeycomb catalyst body obtained by loading a three-way catalyst on a honeycomb structure is provided in an exhaust gas flow passage from a gasoline engine (see, e.g., JP-A-7-766). Such an exhaust gas purification system can purify NOx, CO, and HC in exhaust gas discharged from the gasoline engine with the three-way catalyst.

In addition, in the exhaust gas purification system, a gas sensor (e.g., oxygen sensor, NOx sensor, etc.) is generally disposed in order to accurately measure gas conditions (e.g., excess air factor (λ), oxygen concentration, NOx concentration, etc.) in exhaust gas, and exhaust gas is monitored by the gas sensor (see, e.g., JP-A-7-766). At this time, space saving of the exhaust gas purification system is planned by forming a hole or the like in the honeycomb catalyst body and disposing the gas sensor in the hole or the like (see, e.g., JP-A-2003-225576).

As the honeycomb catalyst body, there is used a so-called flow through type having a structure where cells (flow passages) pass through from the inlet to the outlet with a catalyst being carried on the surfaces of the partition walls forming the cells (with a catalyst layer being formed). In addition, specifically, a method for purifying exhaust gas by the use of the honeycomb catalyst body is exemplified by the method for purifying the exhaust gas by allowing the exhaust gas to enter cells from one end face side of a honeycomb catalyst body to bring the exhaust gas into contact with the catalyst layer of the partition wall surfaces (see, e.g., JP-A-2003-33664).

However, condensed water (e.g., water due to condensation) staying in an exhaust pipe or the like sometimes adhere to the gas sensor at the time of engine cold start. In such a case, since the detection portion (detection element or the like) of a gas sensor is often made of ceramic and heated with a heater during operation, the gas sensor sometimes breaks when it is rapidly cooled by the adhesion of condensed water to the gas sensor. Therefore, development of a gas sensor and a honeycomb catalyst body hardly having breakage has been proceeding. For example, regarding the gas sensor, a protection cover for protecting the gas sensor has been proposed (see, e.g., JP-A-2008-281583 and JP-A-2000-304719). In addition, regarding the honeycomb catalyst body (filter), adjustment of water flow resistance of the condensed water inside the filter has been proposed (JP-A-2009-74425).

However, since each of the gas sensors described in JP-A-2008-281583 and JP-A-2000-304719 needs its own protection cover for inhibiting the condensed water from adhering, and since the structure of the protection cover is complex, it has a problem of high cost to have insufficient versatility. In addition, in the filter described in JP-A-2009-74425, due to the adjustment of the water flow resistance of the condensed water, the volume of the plugging material increases, or the partition walls become thick. Therefore, there arise problems of increase in pressure loss, increase in mass or heat capacity, and the like.

### Summary of the Invention

The present invention has been made in view of such prior art problems and aims to provide a honeycomb catalyst body capable of inhibiting breakage of a gas sensor due to adhesion of water by a simple method with maintaining the function of the gas sensor.

As the results of the inventors' earnest investigation in order to achieve the aforementioned problems, it was found out that the problems can be solved by plugging part of the cells communicating with the sensor disposition region where a gas sensor is disposed, which led to the completion of the present invention.

According to the present invention, the following honeycomb catalyst body is provided.

[1] A honeycomb catalyst body for purifying components to be purified in exhaust gas,
wherein the honeycomb catalyst body includes a catalyst-carrying honey comb structure having partition walls separating and forming a plurality of cells functioning as fluid passages of the exhaust gas and having catalyst loaded on at least a part of surfaces thereof,
a sensor disposition region of a groove, a hole, or an edging where a gas sensor is disposed is formed in the catalyst-carrying honeycomb structure, and part of the cells communicating with the sensor disposition region are plugged with plugging portions, and
a percentage of the number of plugged cells where the plugging portions are disposed in the sum of the plugged cells where the plugging portions are disposed and through-cells where no plugging portion is disposed among the cells communicating with the sensor disposition region is 15 to 60%.

[2] The honeycomb catalyst body according to [1], wherein the percentage of the number of plugged cells is 20 to 60%.

[3] The honeycomb catalyst body according to [1] or [2], wherein the percentage of the number of plugged cells is 25 to 60%.

[4] The honeycomb catalyst body according to any one of [1] to [3], wherein the percentage of the number of plugged cells is 25 to 50%.

[5] The honeycomb catalyst body according toanyoneof [1] to [4], wherein all the plugging portions are formed on an end portion on one side of the catalyst-carrying honeycomb structure.

A honeycomb catalyst body of the present invention exhibits an effect of being able to inhibit breakage of a gas sensor due to adhesion of water by a simple method with maintaining the function of the gas sensor.

### Brief Description of the Drawings

[Fig. 1] Fig. 1 is a perspective view schematically showing one embodiment of a honeycomb catalyst body of the present invention.

[Fig. 2] Fig. 2 is a cross-sectional view schematically showing a cross section of a honeycomb catalyst body shown in Fig. 1.

[Fig. 3] Fig. 3 is a plan view schematically showing and end face of a honeycomb catalyst body shown in Fig. 2.

[Fig. 4] Fig. 4 is a cross-sectional view corresponding with Fig. 2 and schematically showing another embodiment of a honeycomb catalyst body of the present invention.

[Fig. 5] Fig. 5 is a cross-sectional view schematically showing the A-A' cross section of the honeycomb catalyst body shown in Fig. 4.

[Fig. 6] Fig. 6 is a cross-sectional view corresponding with Fig. 2 and schematically showing another embodiment of a honeycomb catalyst body of the present invention.

[Fig. 7] Fig. 7 is a cross-sectional view schematically showing another embodiment of a honeycomb catalyst body of the present invention.

[Fig. 8] Fig. 8 is a plan view schematically showing another embodiment of a honeycomb catalyst body of the present invention.

[Fig. 9] Fig. 9 is an explanatory view schematically showing the equipment, set, flow, and the like used in the experiments of Examples and Comparative Examples.

[Fig. 10] Fig. 10 is a partial cross-sectional view schematically showing a tip portion of an oxygen sensor of the equipment shown in Fig. 9.

[Fig. 11] Fig. 11 is a graph showing the relation between the oxygen sensor output voltage and time obtained in the experiment.

### Reference Numerals

1a, 1b, 1c, 1d, 1e: honeycomb catalyst body, 11: cell, 13: partition wall, 15: catalyst-carrying honeycombstructure, 17a, 17b, 17c: sensor disposition region, 19, 19a: plugging portion, 21: end portion on one side, 22: end portion on exhaust gas outflow side, 23: plugged cell, 25: through-cell, 27: communicating cell, 29: cell other than communicating cell, 31: engine control computer, 33: fuel injection amount control section, 34: engine, 35: exhaust gas purification system, 36: exhaust manifold, 37: gas sensor, 39: housing, 41: protection cover, 41a: through-hole, 42: sensor element

### Detailed Description of the Invention

Hereinbelow, embodiments of the present invention will be described. However, the present invention is by no means limited to the following embodiments, and it should be understood that embodiments obtained by adding suitable changes, improvements, or the like to the following embodiments on the basis of ordinary knowledge of a person of ordinary skill in the art within the range of not deviating from the gist of the present invention are included in the scope of the present invention.

### [1] Honeycomb catalyst body:

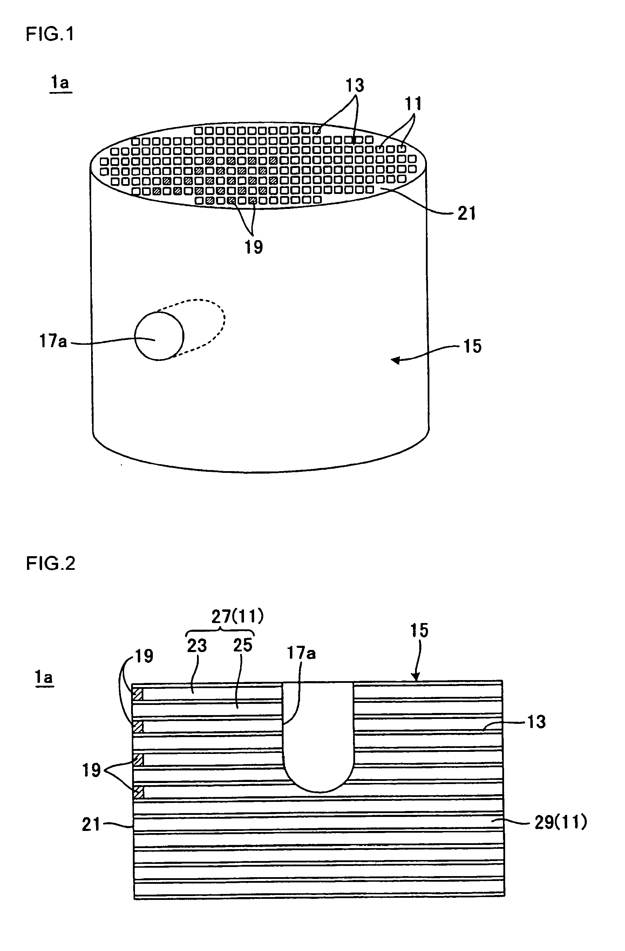

Fig. 1 is a perspective view schematically showing an embodiment of a honeycomb catalyst body of the present invention, and Fig. 2 is a cross-sectional view schematically showing a cross section of a honeycomb catalyst body shown in Fig. 1. The honeycomb catalyst body 1a of the present embodiment shown in Figs. 1 and 2 purifies components to be purified in exhaust gas and includes a catalyst-carrying honeycomb structure 15 having partition walls 13 separating and forming a plurality of cells 11 functioning as fluid passages of the exhaust gas and having catalyst loaded on at least a part of the surfaces. A sensor disposition region 17a of a hole where a gas sensor is disposed is formed in the catalyst-carrying honeycomb structure 15, and part (plugged cells) of the cells communicating with the sensor disposition region 17a (communicating cells) are plugged with plugging portions 19. A percentage of the number of plugged cells 23 where the plugging portions 19 are disposed in the sum of the plugged cells 23 where the plugging portions 19 are disposed and the through cells 25 where no plugging portion is disposed among the cells communicating with the sensor disposition region 17a (through-cells 27) is 15 to 60%. By such constitution, the honeycomb catalyst body 1a of the present embodiment can inhibit breakage of a gas sensor due to adhesion of water by a simple method with maintaining the function of the gas sensor. Incidentally, a plurality of cells 11 are disposed to have a honeycomb shape, and the catalyst (catalyst layer) is omitted in each of Figs. 1 to 6.

Here, a honeycomb catalyst body purifies target components to be purified, such as carbon monoxide (CO), hydrocarbon (HC), nitrogen oxide (NOx), and sulfur oxide (SOx) contained in exhaust gas discharged from an automobile engine, a construction machine engine, an industrial stationary engine, a burning appliance, and the like, and a catalyst layer is loaded on the surfaces of the partition walls forming the cells in such a manner that exhaust gas can be purified by being brought into contact with the catalyst layer of the partition wall surfaces.

### [1-1] Catalyst-carrying honeycomb structure:

A catalyst-carrying honeycomb structure has partition walls separating and forming a plurality of cells functioning as exhaust gas flow passages and having a catalyst loaded on at least a part of the surfaces. In the catalyst-carrying honeycomb structure is formed a sensor disposition region of a groove, a hole, or an edging where a gas sensor is disposed, and part of the cells communicating with the sensor disposition region are plugged with plugging portions. The shape of the catalyst-carrying honeycomb structure may be, for example, a columnar shape such as a circular columnar shape or a prismatic columnar shape.

### [1-1-1] Partition wall:

Partition walls are preferably made of ceramic from the viewpoints of strength, heat resistance, and the like. Examples of the ceramic include, as the main component, at least one kind of material selected from the group consisting of alumina, mullite, cordierite, silicon carbide (SiC), silicon nitride, silicon-silicon carbide based composite material formed with silicon carbide as the framework and silicon as the bonding material, silicon carbide-cordierite based composite material, spinel, aluminum titanate, lithium aluminum silicate (LAS), and Fe-Cr-Al based metal. Here, the "main component" means a component contained at 50 mass% or more with respect to the entire amount. Of these, silicon carbide, silicon-silicon carbide based composite material, cordierite, and aluminum titanate are preferable from the view points of strength, heat resistance, and the like.

The partition wall thickness is not particularly limited, but preferably 25 to 500 µm, more preferably 37 to 310 µm, particularly preferably 50 to 210 µm. When the aforementioned partition wall thickness is below 25 µm, strength may be insufficient as a honeycomb catalyst body. On the other hand, when it is above 500 µm, the pressure loss and heat capacity may become large. Here, in the present specification, the "partition wall thickness" is a value obtained by measurement by image analysis of a cross section of a partition wall by the use of a scanning electron microscope (SEM) or a microscope.

The shape of the cells, that is, the shape in a cross section perpendicular to the central axial direction of the honeycomb catalyst body is fixed from one side face to the other side face of the honeycomb catalyst body, and examples of the shape include a polygon such as a triangle, a rectangle, a hexagon, and an octagon; a circle; an ellipse; a racetrack; and a partially deformed shape of these shapes.

Of these, from the viewpoint of easy manufacture, a triangle, a rectangle, and a hexagon are preferable. Incidentally, the aforementioned cross-sectional shape of the cells may be the same or different. That is, for example, a combination of a rectangle and an octagon may be employed.

The cell density is not particularly limited, but preferably 8 to 160 cells/cm², more preferably 23 to 140 cells/cm², particularly preferably 30 to 100 cells/cm². When the aforementioned cell density is below 8 cells/cm², the geometric surface area of the filter may be insufficient. On the other hand, when it is above 160 cells/cm², pressure loss may become large. Here, the "cell density" means the number of cells per unit area in a cross section perpendicular to the central axial direction of the honeycomb catalyst body.

When the partition walls are of porous ceramic, the porosity of the partition walls is preferable 20 to 80%, more preferably 25 to 70%, and particularly 28 to 65%. When the porosity of the partition walls is below 20%, the heat capacity may become too large. On the other hand, when it is above 80%, the problem of deterioration in strength as a structure may be caused. Here, the "porosity" in the present specification is a value obtained by measurement with a mercury porosimeter.

### [1-1-1a] Catalyst:

On the partition walls, a catalyst for purifying target components in exhaust gas is loaded on at least a part of the surfaces thereof. Though it is only necessary to load the catalyst on at least a part of the surfaces of the partition walls, it is preferable to load the catalyst on the entire surfaces of the partition walls. In the case of porous partition walls having pores, it is preferable to load the catalyst on the surfaces of the pores besides the surfaces of the partition walls. The loading of the catalyst also on the surfaces of the pores has the advantage of improving the efficiency for purifying the target components in exhaust gas.

As the catalyst, specifically, a noble metal such as platinum (Pt), rhodium (Rh), and palladium (Pd) can be employed, and it is preferable to use at least one noble metal selected from the group consisting of platinum (Pt), rhodium (Rh), and palladium (Pd). As a method for loading the catalyst on the partition walls, there may be employed, for example, a method where a honeycomb catalyst body (honeycomb structure) with no catalyst carried thereon is immersed in slurry containing a catalyst to allow the slurry to enter the cells, and extra slurry is blown away with air or the like, followed by drying.

### [1-1-2] Sensor disposition region:

The sensor disposition region is a region of a groove, a hole, or an edging where a gas sensor is disposed. Since a gas sensor can be inserted and arranged in the honeycomb catalyst body by forming such a sensor disposition region, space saving of the exhaust gas purification system can be planned. In addition, since exhaust gas in the honeycomb catalyst body can be monitored, the purification performance (e.g., oxygen concentration and NOx concentration) of the honeycomb catalyst body can accurately be measured.

As described above, the sensor disposition region may be any of a groove, a hole, and an edging, and the shape may suitably be selected in accordance with the shape of the gas sensor. For example, as the shape of the groove, a cross section having a U-shape with all corners in straight angles, a U-shape with round corners, or a V-shape may be employed. As the shape of the hole, a cross section having a circle, an ellipse, a triangle, a rectangle, or a polygon may be employed. As the shape of the edging, an edging face having a planar shape or a curved face shape may be employed. Of these, a circular shape is preferable from the viewpoints of good responsiveness and durability and easy formation.

In addition, in the case that the sensor disposition region is a groove or a hole, the sensor disposition region may be formed in such a manner that the axis (axis along the extension direction) may be perpendicular to the central axis of the honeycomb catalyst body (see Fig. 2) or that the axis may incline with respect to the central axis. Though there is no particular limitation on the formation portion when the sensor disposition region is a hole (the sensor disposition region may be formed in any portion of the honeycomb catalyst body), it is preferable to form it in the central portion in the central axial direction of the honeycomb catalyst body, for example, as shown in Fig. 2.

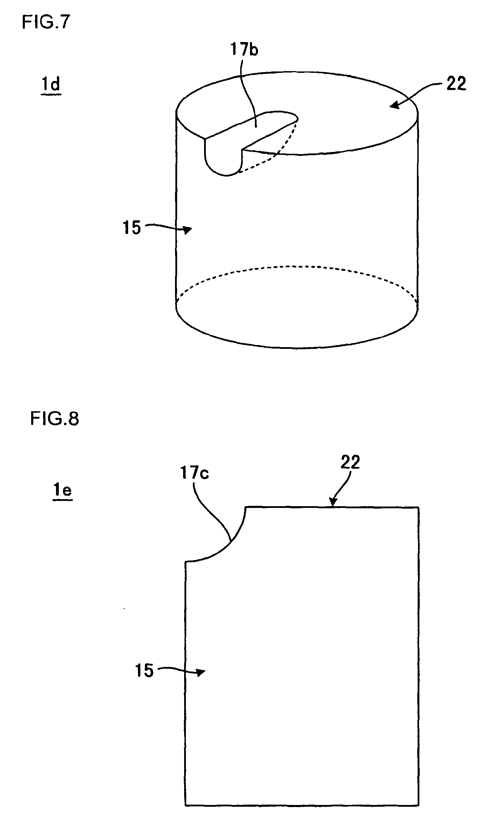

For example, the honeycomb catalyst body 1a shown in Figs. 1 and 2 is an example where a sensor disposition region 17a of a hole whose axis is perpendicular to the aforementioned central axis and which has a circular cross section is formed in the central portion in the central axial direction of the honeycomb catalyst body 1a. The honeycomb catalyst body 1d shown in Fig. 7 is an example where a sensor disposition region 17b of a groove having a U-shaped cross section is formed in the end portion 22 on the exhaust gas outflow side. The honeycomb catalyst body 1e shown in Fig. 8 is anexamplewhere a sensor disposition region 17c of an edging having a curved edging face is formed in end portion 22 on the exhaust gas outflow side. Incidentally, Fig. 7 is a perspective view schematically showing another embodiment of a honeycomb catalyst body of the present invention, where the cells (partition walls) and plugging portions are omitted. Fig. 8 is a plan view schematically showing another embodiment of a honeycomb catalyst body of the present invention.

The sensor disposition region can be formed by the use of a drilling tool such as a drill.

The size (diameter) of the sensor disposition region can suitably be determined in accordance with the size of the sensor to be used. Specifically, it can be determined in accordance with the size of a general sensor (having a diameter of about 0.1 to 20 mm). Incidentally, since a sensor having a diameter of 7 to 15 mm is general in the case of a gas sensor such as an oxygen sensor, the size (diameter) of the sensor disposition region is preferably 10 to 60 mm.

### [1-1-3] Plugging portion:

Plugging portions plug part of the cells communicating with the sensor disposition region. Such plugging can inhibit the condensed water (water due to condensation) staying in an exhaust pipe or the like from passing though the cells and adhering to the gas sensor. Therefore, breakage of the gas sensor due to adhesion of water to the gas sensor can be reduced.

In a honeycomb catalyst body of the present invention, the percentage of the number of plugged cells where the plugging portions are disposed in the sum of the plugged cells where the plugging portions are disposed and the through-cells where no plugging portion is disposed among the cells communicating with the sensor disposition region (communicating cells) is 15 to 60%, preferably 20 to 60%, more preferably 25 to 60%, and particularly preferably 25 to 50%. By specifying the proportion of the number to 25 to 50%, breakage of the gas sensor due to adhesion of water or the like can be inhibited particularly effectively. When the aforementioned percentage is below 15%, since the probability that condensed water adheres to the gas sensor becomes high, the frequency of causing a crack in the gas sensor becomes high. On the other hand, when the percentage is above 60%, since many of the cells communicating with the sensor disposition region are plugged, the feed back frequency falls. That is, the function of the gas sensor cannot be maintained. In other words, since the sensing responsiveness by the gas sensor falls, exhaust gas cannot be monitored accurately by the gas sensor.

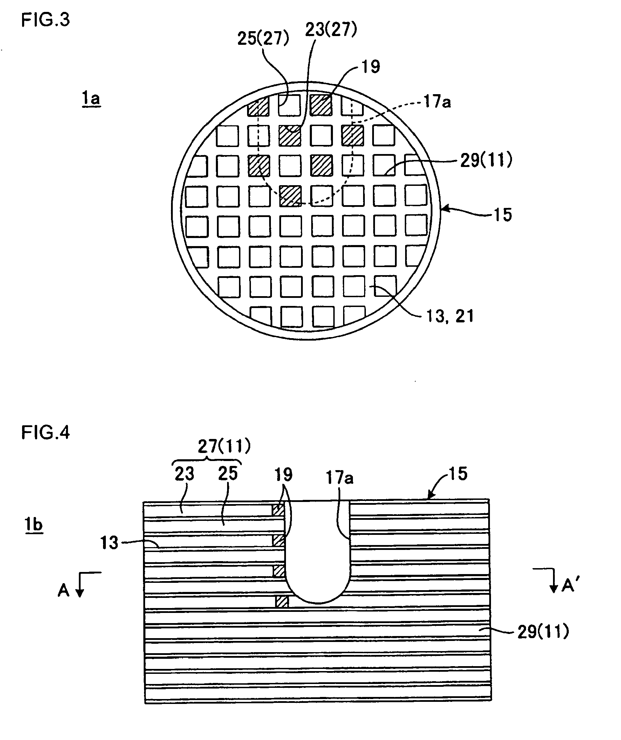

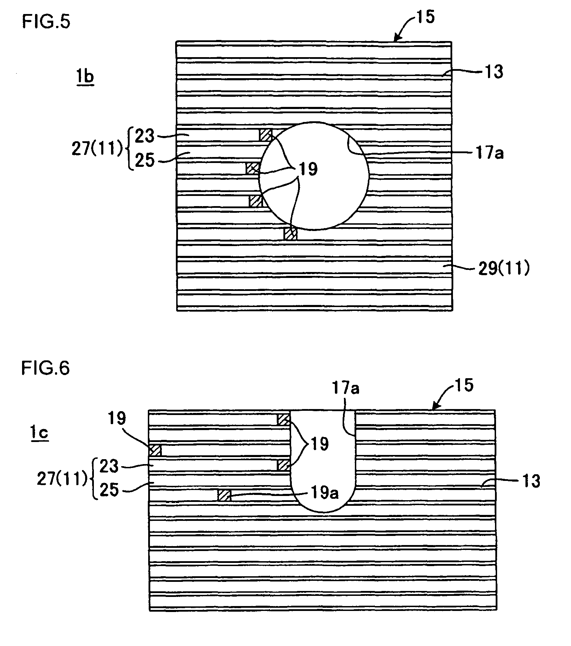

The positions of the plugging portions in the cells are not particularly limited and may be in an end portion on one side of the catalyst-carrying honeycomb structure, an end portion on the sensor disposition region side, the middle of the cells, and the like. For example, the honeycomb catalyst body 1a shown in Figs. 1 to 3 is an example where the plugging portions 19 are formed in the end portions 21 on one side of the catalyst-carrying honeycomb structure 15. In addition, the honeycomb catalyst body 1b shown in Figs. 4 to 5 is an example where the plugging portions 19 are formed in the end portions on the sensor disposition region 17a side of the plugged cells 23. Further, the honeycomb catalyst body 1c shown in Fig. 6 is an example where a plugging portion 19 (plugging portion 19a) is formed in the middle of a cell 11. Incidentally, Fig. 5 is a cross-sectional view schematically showing the A-A' cross section of the honeycomb catalyst body shown in Fig. 4.

It is preferable that all the plugging portions are formed in end portions on one side of the catalyst-carrying honeycomb structure because of easy manufacture. For example, the honeycomb catalyst body 1a shown in Figs. 1 to 3 is an example where all the plugging portions 19 are formed in end portions 21 on one side of the catalyst-carrying honeycomb structure 15.

In addition, it is preferable that the plugging portions 19 are disposed so that the cells with plugging portions (plugging portion cells) and the cells without plugging portion (through-cells) are alternately disposed to show a checkerwise pattern. Such disposition of the plugging portions can inhibit water from adhering to the gas sensor further successfully. For example, the honeycomb catalyst body 1a shown in Fig. 3 is an example where plugging portions 19 are disposed in such a manner that the cells with plugging portions (plugging portion cells) 23 and the cells without plugging portion (through-cells) 25 are alternately disposed to show a checkerwise pattern.

As the method for forming the plugging portions, a conventionally known method can suitably be employed. For example, when a plugging portion is formed in the middle of a cell, the plugging portion can be formed as follows. In the first place, a honeycomb structure with no plugging portion formed therein is disposed in such a manner that the end face on the exhaust gas outflow side is located on the lower side in the vertical direction. Next, a paper stick-shaped member having a size (thickness) capable of engaging with the cell is prepared, and the stick-shaped member is inserted into the cell from the exhaust gas outflow side until the end face is located in the position where the plugging portion is formed. Then, from the exhaust gas inflow side, a raw material for the plugging portion is supplied to the inside of the cell to allow the raw material to deposit on the end face of the stick-shaped member, followed by drying and firing to obtain a honeycomb structure (honeycomb catalyst body) where the plugging portion is formed in the desired position.

In a honeycomb catalyst body of the present invention, it is preferable that no plugging portion is formed in the cells other than the cells communicating with the sensor disposition region (communicating cells). When a plugging portion is formed in a cell other than the communicating cells, pressure loss of the honeycomb catalyst body may rise. The honeycomb catalyst body 1a shown in Fig. 3 is an example where no plugging portion 19 is formed in the cells other than the cells 27 communicating with the sensor disposition region 17a (communicating cells).

### [2] Method for manufacturing honeycomb catalyst body:

For manufacturing a honeycomb catalyst body of the present invention, in the first place, kneaded clay is prepared. The kneaded clay can be obtained as one having plasticity by adding, to a material such as silicon carbide, silicon-silicon carbide based composite material, silicon nitride, cordierite, mullite, alumina, spinel, silicon carbide-cordierite based composite material, lithium aluminum silicate, aluminum titanate, and a Fe-Cr-Al based metal, a binder such as methyl cellulose, hydroxypropoxyl cellulose, hydroxyethyl cellulose, carboxymetyl cellulose, and polyvinyl alcohol and further adding a surfactant, water as a solvent, and the like to them.

Next, the kneaded clay prepared above is formed into a honeycomb shape to obtain a honeycomb formed body. As a means for forming the kneaded clay into a honeycomb shape, for example, an extrusion forming method can be employed.

Then, the honeycomb formed body is dried and then fired to obtain a honeycomb fired body. Incidentally, there is no particular limitation on the method for drying the honeycomb formed body, and there may be employed, a conventionally known method such as hot air drying, microwave drying, dielectric drying, reduced pressure drying, vacuum drying, and freeze drying. In addition, since the firing conditions (e.g., temperature and time) depend on the kind of the forming material, suitable conditions may be selected according to the kind.

Next, a sensor disposition region of a groove, a hole, or an edging is formed in the outer periphery of the honeycomb fired body obtained above by the use of a drilling tool such as a drill.

Next, plugging portions are formed in predetermined cells among the cells communicating with the sensor disposition region. At this time, it is preferable that the plugging portions are alternately formed in adjacent cells to have a disposition showing a so-called checkerwise pattern. Incidentally, as the method for forming the plugging portions, there may be employed, for example, the method described above or the method where one end portion of the honeycomb fired body is immersed in plugging slurry in a state that the cells requiring no plugging portion is masked with a mask film or the like to fill the plugging slurry in the cells with no mask, followed by drying and firing. Incidentally, as the plugging slurry, the same material as the aforementioned raw material for the kneaded clay can be used.

Next, after the honeycomb fired body (honeycomb structure) having plugging portions formed therein is immersed in catalyst slurry containing a catalyst (slurry having a catalyst dispersed therein), it is dried to obtain a honeycomb structure (honeycomb catalyst body) having a catalyst loaded on the surfaces of the partition walls thereof. As the catalyst, the aforementioned catalyst can be used. Incidentally, it is also possible to load the catalyst before forming the plugging portion and then form the plugging portion.

### Example

Hereinbelow, the present invention will be described specifically on the basis of the Examples. However, the present invention is by no means limited to these Examples. Incidentally, various evaluations and measurements in the Examples and Comparative Examples were carried out according to the following methods.

### [Plugging percentage]:

Plugging percentage (%) was calculated by the formula: (Number of the cells having plugging portions among the cells communicating with the sensor disposition region) / (number of the cells communicating with the sensor disposition region) × 100.

### [Water injection test]:

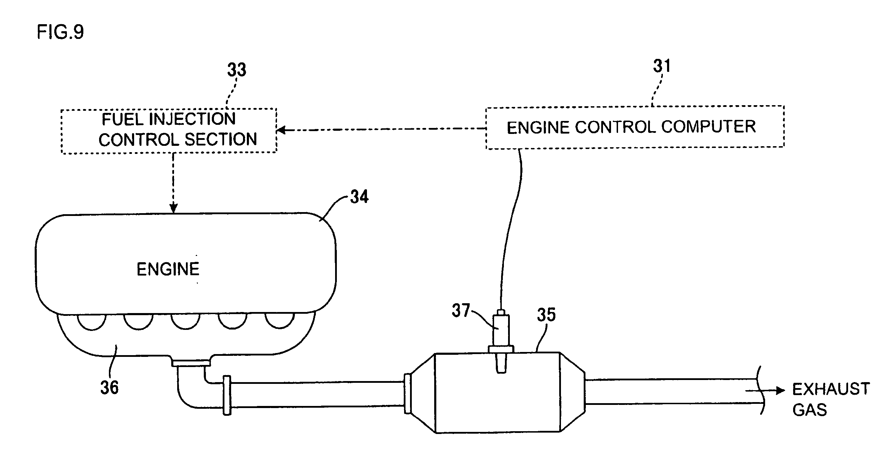

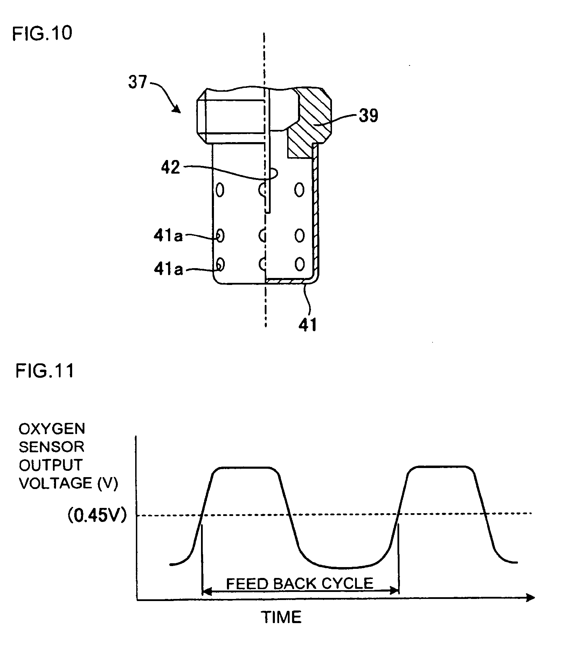

A 2400 cc four-cylinder gasoline engine vehicle was subjected to water injection test using an apparatus having a structure as shown in Fig. 9 with a chassis dynamometer. The aforementioned apparatus controls the engine 34 with a fuel injection amount control section 33 which receives directions from the engine control computer 31. In the exhaust gas passage of the engine 34, the exhaust gas purification system 35 having a honeycomb catalyst body obtained in each of Examples and Comparative Examples was disposed. In the honey comb catalyst body of the exhaust gas purification system 35, the gas sensor 37 was disposed. As the gas sensor 37, a heated oxygen sensor using a plate-shaped zirconia solid electrolyte as shown in Fig. 10 was used. Fig. 10 is a partial cross-sectional view schematically showing the tip portion of the gas sensor 37. The gas sensor 37 had a cylindrical housing 39, a protection cover 41 connected with the tip of the housing 39, and a sensor element 42 disposed in a space inside the housing 39 and the protection cover 41 and measuring the oxygen concentration in exhaust gas, and the protection cover 41 is provided with a plurality of through-holes 41a. Incidentally, Fig. 9 is an explanatory view schematically showing the equipment, set, flow, and the like used in the experiments of Examples and Comparative Examples, and Fig. 10 is a partial cross-sectional view schematically showing a tip portion of the heated oxygen sensor of the equipment shown in Fig. 9.

Then, after water at the amount (ml) shown in Tables 1 to 3 was poured into the exhaust manifold (shown by the reference numeral "36" in Fig. 9) located upstream of the heated oxygen sensor for controlling engine in a state that the engine is cold, that is, in a state that the temperature of the engine cooling water is 30°C or less, the engine was activated. Simultaneously with the engine start up, energization of the heater of the heated oxygen sensor was started. After the engine start up, driving was performed for two minutes in an idling state, and then racing up to 5000 rpm was performed three times. Then, presence/absence of crack generation in the sensor element was judged by eye observation. The test was performed for 10 sensors (heated oxygen sensors), and the number of sensor element (s) in which crack was caused was obtained. Incidentally, when no crack generation was confirmed with the water amount of 50 ml, it can be judged as usable depending on the use conditions of the type of vehicle and the like. In addition, when no crack generation was confirmed with the water amount of 100 ml, it can be judged as no problem in design.

### [Feed back frequency]:

A 2400 cc four-cylinder gasoline engine vehicle was allowed to travel at a speed of 100 km per hour with a chassis dynamometer to measure the feed back control frequency of the gas sensor 37 (heated oxygen sensor) upon traveling. The feed back cycle was obtained from the output voltage of the heated oxygen sensor, and the feed back frequency was calculated from the value (see Fig. 11). Incidentally, the feed back control frequency is preferably 2 Hz or more. However, when it is 1.7 Hz or more, no practical problem arises. Fig. 11 is a graph showing the relation between the oxygen sensor (heated oxygen sensor) output voltage and time (minute) obtained in the experiment.

### (Example 1)

In the first place, as raw material, talc, kaolin, and alumina were blended, and, with respect to 100 parts by mass, 6 parts by mass of methyl cellulose as an organic binder, 2.5 parts by mass of a surfactant, and 24 parts by mass of water were added, and they were uniformly mixed and kneaded to obtain kneaded clay for forming. By the use of the kneaded clay, there was formed a honeycomb formed body having a size (diameter × length) of 144 × 152 mm after firing, partition wall thickness of 0. 1 mm (4 mil), cell number of 62 cells/cm² (400 cpsi), and cells each having a rectangular cross-sectional shape. The honeycomb formed body was fired to obtain a columnar cylindrical honeycomb fired body. A sensor disposition region having a circular cross-section with the size (diameter × depth) of 25 × 25 mm was formed with a drill in the position of half the length of the honeycomb fired body so as to be perpendicular to the central axis of the honeycomb fired body. Then, plugging portions having a length of 3 mm were formed in part (cells to be plugged) of the cells (communicating cells) communicating with the sensor disposition region to obtain a honeycomb structure. Incidentally, the honeycomb structure had all the plugging portions on an end portion on one side of the structure, and the plugging percentage was 15%. In addition, the material for plugging was the same as the raw material for the aforementioned kneaded clay. Then, the honeycomb structure having plugging portions formed therein was immersed in catalyst slurry containing a catalyst (specifically, platinum and palladium) for loading the catalyst on the surfaces of the partition walls to obtain a honeycomb catalyst body.

As the results of the water injection test in Example 1, cracks were caused in two sensors out of the 10 sensors. In addition, the feed back frequency was 2.3 Hz.

### (Examples 2 to 26 and Comparative Examples 1 to 6)

There were obtained honeycomb catalyst bodies in the same manner as in Example 1 except that honeycomb catalyst bodies as shown in Tables 1 to 3 were obtained. Each of the honeycomb catalyst bodies was evaluated in the same manner as in Example 1. Incidentally, in Tables 1 to 3, the "upstream side end portion" of the column of "position of plugging portion" means an end portion on one side of the honeycomb catalyst body and, specifically, portion where plugging portions 19 are formed of the honeycomb catalyst body 1a shown in Fig. 2. The "sensor disposition region upstream side" means the end portion on the side opposite to the end portion on one side of the honeycomb catalyst body among the cells communicating with the sensor disposition region and, specifically, portion where the plugging portions 19 are formed of the honeycomb catalyst body 1a shown in Fig. 4. "100 mm from the upstream side end face" means the position of 100 mm from the end face on the aforementioned upstream side end portion. Incidentally, Table 2 shows the results where only the positions of plugging portions were changed with respect to Examples and Comparative Examples of Table 1.

**Table 1**

| | Test No. | Honeycomb catalyst body Diameter × length (mm) | Sensor disposition region Diameter × depth (mm) | Plugging percentage (%) | Position of plugging portion | Water (ml) | Number of sensor element(s) amount in which crack was caused | Feed back frequency (Hz) |
|---|---|---|---|---|---|---|---|---|
| Comp. Ex. 1 | Test 1 | 144 × 152 | 25 × 25 | 0 (no plugging) | - | 50 | 4/10 | 2.3 |
| Example 1 | Test 2 | | | 15 | Upstream side end portion | 100 | 2/10 | 2.3 |
| Example 2 | Test 3 | | | 15 | | 80 | 1/10 | 2.3 |
| Example 3 | Test 4 | | | 15 | | 50 | 0/10 | 2.3 |
| Example 4 | Test 5 | | | 20 | | 100 | 1/10 | 2.3 |
| Example 5 | Test 6 | | | 20 | | 80 | 0/10 | 2.3 |
| Example 6 | Test 7 | | | 25 | | 100 | 0/10 | 2.3 |
| Example 7 | Test 8 | | | 33 | | 100 | 0/10 | 2.2 |
| Example 8 | Test 9 | | | 50 | | 100 | 0/10 | 2.2 |
| Example 9 | Test 10 | | | 60 | | 100 | 0/10 | 1.9 |
| Comp. Ex. 2 | Test 11 | | | 70 | | 100 | 0/10 | 1.6 |

**Table 2**

| | Test No. | Honeycomb catalyst body Diameter × length (mm) | Sensor disposition region Diameter × depth (mm) | Plugging percentage (%) | Position of plugging portion | Water amount (ml) | Number of sensor element(s) in which crack was caused | Feed back frequency (Hz) |
|---|---|---|---|---|---|---|---|---|
| Example 10 | Test 12 | 144 × 152 | 25 × 25 | 15 | Sensor disposition region upstream side | 100 | 2/10 | 2.3 |
| Example 11 | Test 13 | | | 15 | | 80 | 1/10 | 2.3 |
| Example 12 | Test 14 | | | 15 | | 50 | 0/10 | 2.3 |
| Example 13 | Test 15 | | | 20 | | 100 | 1/10 | 2.3 |
| Example 14 | Test 16 | | | 20 | | 80 | 0/10 | 2.3 |
| Example 15 | Test 17 | | | 25 | | 100 | 0/10 | 2.3 |
| Example 16 | Test 18 | | | 33 | | 100 | 0/10 | 2.2 |
| Example 17 | Test 19 | | | 50 | | 100 | 0/10 | 2.2 |
| Example 18 | Test 20 | | | 60 | | 100 | 0/10 | 1.9 |
| Comp. Ex. 3 | Test 21 | | | 70 | | 100 | 0/10 | 1.6 |

**Table 3**

| | Test No. | Honeycomb catalyst body Diameter × length (mm) | Sensor disposition region Diameter × depth (mm) | Plugging percentage (%) | Position of plugging portion | Water amount (ml) | Number of sensor element(s) in which crack was caused | Feed back frequency (Hz) |
|---|---|---|---|---|---|---|---|---|
| Comp. Ex. 4 | Test 22 | 144 × 152 | 35 × 40 | 0 (no plugging) | - | 50 | 5/10 | 2.3 |
| Comp. Ex. 5 | Test 23 | 300 × 350 | 50 × 45 | 0 (no plugging) | - | 50 | 3/10 | 2.2 |
| Examples 19 | Test 24 | 144 × 152 | 35 × 40 | 15 | Upstream side end portion | 50 | 0/10 | 2.3 |
| Example 20 | Test 25 | | | 50 | | 100 | 0/10 | 2.2 |
| Example 21 | Test 26 | | 50 × 45 | 50 | Sensor disposition region upstream side | 100 | 0/10 | 2.2 |
| Example 22 | Test 27 | 300 × 350 | 25 × 25 | 25 | upstream side end portion | 100 | 0/10 | 2.2 |
| Example 23 | Test 28 | | 50 × 45 | 25 | | 100 | 0/10 | 2.2 |
| Example 24 | Test 29 | | | 60 | | 100 | 0/10 | 1.8 |
| Example 25 | Test 30 | | | 50 | Sensor disposition region upstream side | 100 | 0/10 | 2.1 |
| Example 26 | Test 31 | | | 25 | 100mm from upstream side end face | 100 | 0/10 | 2.2 |
| Comp. Ex. 6 | Test 32 | | | 70 | | 100 | 0/10 | 1.5 |

As clear from Tables 1 to 3, it was confirmed that the honeycomb catalyst bodies of the Examples 1 to 26 can inhibit breakage of a gas sensor due to adhesion of water by a simple method with maintaining the function of the gas sensor in comparison with the honeycomb catalyst bodies of Comparative Examples 1 to 6. [0071] A honeycomb catalyst body of the present invention can suitably be used as a filter for purifying target components to be purified, such as carbon monoxide (CO), hydrocarbon (HC), nitrogen oxide (NOx), and sulfur oxide (SOx) contained in exhaust gas discharged from an automobile engine, a construction machine engine, an industrial stationary engine, a burning appliance, and the like.

## Claims

1. A honeycomb catalyst body for purifying components to be purified in exhaust gas,
wherein the honeycomb catalyst body includes a catalyst-carrying honeycomb structure (15) having partition walls (13) separating and forming a plurality of cells functioning as fluid passages of the exhaust gas and having catalyst loaded on at least a part of surfaces thereof,
a sensor disposition region (17a) of a groove, a hole, or an edging where a gas sensor is disposed is formed in the catalyst-carrying honeycomb structure, and part of the cells communicating with the sensor disposition region are plugged with plugging portions (19), and
a percentage of the number of plugged cells (23) where the plugging portions are disposed in the sum of the plugged cells where the plugging portions are disposed and through-cells (25) where no plugging portion is disposed among the cells (27) communicating with the sensor disposition region (17a) is 15 to 60%.

2. The honeycomb catalyst body according to Claim 1, wherein the percentage of the number of plugged cells is 20 to 60%.

3. The honeycomb catalyst body according to Claim 1 or 2, wherein the percentage of the number of plugged cells is 25 to 60%.

4. The honeycomb catalyst body according to any one of Claims 1 to 3, wherein the percentage of the number of plugged cells is 25 to 50%.

5. The honeycomb catalyst body according to any one of Claims 1 to 4, wherein all the plugging portions are formed on an end portion on one side of the catalyst-carrying honeycomb structure.

## Patentansprüche

1. Wabenkatalysatorkörper zur Reinigung von zu reinigenden Anteilen in Abgasen,
worin der Wabenkatalysatorkörper eine einen Katalysator tragende Wabenstruktur (15) umfasst, die Trennwände (13) aufweist, die eine Vielzahl an Zellen trennen und bilden, die als Fluiddurchlässe für das Abgas fungieren und die zumindest auf einem Teil ihrer Oberflächen mit einem aufgeladenen Katalysator beladen sind,
worin ein Sensoranordnungsbereich (17a) in Form einer Nut, eines Lochs oder einer Einfassung, wo ein Gassensor angeordnet ist, in der einen Katalysator tragenden Wabenstruktur ausgebildet ist und ein Teil der Zellen, die mit dem Sensoranordnungsbereich kommunizieren, durch Verschlussabschnitte (19) verschlossen sind, und
worin der Anteil der Anzahl verschlossener Zellen (23), in denen die Verschlussabschnitte angeordnet sind, von der Gesamtanzahl der verschlossenen Zellen, in denen die Verschlussabschnitte angeordnet sind, und Durchlasszellen (25), in denen keine Verschlussabschnitte angeordnet sind, unter den Zellen (27), die mit dem Sensoranordnungsbereich (17a) kommunizieren, 15 bis 60 % beträgt.

2. Wabenkatalysatorkörper nach Anspruch 1, worin der Anteil der Anzahl verschlossener Zellen 20 bis 60 % beträgt.

3. Wabenkatalysatorkörper nach Anspruch 1 oder 2, worin der Anteil der Anzahl verschlossener Zellen 25 bis 60 % beträgt.

4. Wabenkatalysatorkörper nach einem der Ansprüche 1 bis 3, worin der Anteil der Anzahl verschlossener Zellen 25 bis 50 % beträgt.

5. Wabenkatalysatorkörper nach einem der Ansprüche 1 bis 4, worin alle Verschlussabschnitte an einem Endabschnitt an einer Seite der einen Katalysator tragenden Wabenstruktur ausgebildet sind.

## Revendications

1. Corps de catalyseur en nid d'abeilles pour purifier des composants devant être purifiés dans un gaz d'échappement,
lequel corps de catalyseur en nid d'abeilles comprend une structure en nid d'abeilles portant un catalyseur (15) ayant des parois de séparation (13) séparant et formant une pluralité d'alvéoles fonctionnant comme des passages de fluide du gaz d'échappement et ayant un catalyseur chargé sur au moins une partie de leurs surfaces,
une région de disposition de capteur (17a) d'une rainure, d'un trou ou d'un bord où est disposé un capteur de gaz est formée dans la structure en nid d'abeilles portant un catalyseur, et une partie des alvéoles communiquant avec la région de disposition de capteur sont bouchées avec des portions d'obturation (19), et
le pourcentage du nombre d'alvéoles bouchées (23) où les portions d'obturation sont disposées, dans la somme des alvéoles bouchées où les portions d'obturation sont disposées et des alvéoles traversantes (25) où aucune portion d'obturation n'est disposée, parmi les alvéoles (27) communiquant avec la région de disposition de capteur (17a), est de 15 à 60 %.

2. Corps de catalyseur en nid d'abeilles selon la revendication 1, dans lequel le pourcentage du nombre d'alvéoles bouchées est de 20 à 60 %.

3. Corps de catalyseur en nid d'abeilles selon la revendication 1 ou 2, dans lequel le pourcentage du nombre d'alvéoles bouchées est de 25 à 60 %.

4. Corps de catalyseur en nid d'abeilles selon l'une quelconque des revendications 1 à 3, dans lequel le pourcentage du nombre d'alvéoles bouchées est de 25 à 50 %.

5. Corps de catalyseur en nid d'abeilles selon l'une quelconque des revendications 1 à 4, dans lequel toutes les portions d'obturation sont formées sur une partie d'extrémité sur un côté de la structure en nid d'abeilles portant un catalyseur.
